# EUROPÄISCHE PATENTSCHRIFT

(11) **EP 3 232 979 B1**
(45) Veröffentlichungstag und Bekanntmachung des Hinweises auf die Patenterteilung: **12.09.2018**
(21) Anmeldenummer: 15823149.8
(22) Anmeldetag: 17.12.2015
(51) Int. Cl.: A61C 1/18, A61B 17/16

(54) **ZAHNÄRZTLICHES INSTRUMENT MIT EINEM GETRIEBE ZUM ANTRIEB EINES WERKZEUGS**
DENTAL INSTRUMENT COMPRISING A GEARING FOR DRIVING A TOOL
INSTRUMENT DENTAIRE COMPRENANT UN MÉCANISME POUR ENTRAÎNER UN OUTIL

(30) Priorität: 17.12.2014 DE 102014226325
(43) Veröffentlichungstag der Anmeldung: 25.10.2017
(73) Patentinhaber: Sirona Dental Systems GmbH, 64625 Bensheim (DE)
(72) Erfinder: ERTUGRUL, Metin, 63322 Rödermark (DE)
(74) Vertreter: Sommer, Peter
(86) Internationale Anmeldenummer: PCT/EP2015/080339
(87) Internationale Veröffentlichungsnummer: WO 2016/097206

(56) Entgegenhaltungen:
- US-A- 5 975 900
- US-A1- 2006 121 412
- US-A1- 2014 318 287

## Beschreibung

### Technisches Gebiet

Die Erfindung betrifft ein zahnärztliches Instrument mit einem Getriebe zum Antrieb eines Werkzeugs.

### Stand der Technik

Bei zahnärztlichen Instrumenten mit Getriebestufen ist zum Schutz von Getriebebauteilen, Wellen, Kugellagern im Antriebsstrang sowie Werkzeugen, beispielsweise zum Schutz von Endo-Feilen, eine Drehmomentbegrenzung sehr hilfreich. Darüber hinaus kann es zum Beispiel bei einer Endo-Behandlung passieren, dass bei Überschreitung eines bestimmten Drehmoments die Endo-Feilen brechen und im Wurzelkanal stecken bleiben. Die Entfernung dieser Feilen ist mit einem erheblichen Zeitaufwand verbunden. Probleme können auch dann auftreten, wenn bei Hand- und Winkelstücken ein Bohrer oder ein Fräser abrupt abgebremst wird, weil er sich beispielsweile verklemmt hat, da in diesem Fall aufgrund von Trägheitsmomenten und kurzen Abbremszeiten hohe Drehmomentbelastungen auftreten. Die daraus resultierende hohe Beanspruchung von Zahnrädern und Spannsystemen innerhalb eines Getriebes, kann zu einem frühzeitigen Versagen durch Gewaltbruch führen.

Aus der EP 1 698 297 A1 ist ein zahnärztliches Instrument mit einem ersten Antrieb und einem zweiten Abtrieb bekannt, wobei zwischen dem ersten Antrieb und dem zweiten Abtrieb eine Kupplung zur Übertragung eines Drehmomentes von dem ersten Antrieb auf den zweiten Abtrieb und an dem zweiten Abtrieb ein Behandlungswerkzeug vorgesehen ist. Dabei ist die Kupplung zur Übertragung eines Drehmomentes von dem ersten Antrieb auf den zweiten Abtrieb als rheologische Kupplung ausgebildet, wodurch eine genaue Steuerung des Drehmoments möglich ist.

Des Weiteren ist aus EP 0 729 221 A1 eine Schaltungsanordnung zur Steuerung der Drehzahl eines Gleichstromkleinstmotors zum Antrieb zahnärztlicher Werkzeuge, bei der im Motorstromkreis Mittel zur kurzzeitigen Unterbrechung des Motorstromes und zur Umschaltung der Klemmenspannung des Motors vorgesehen sind, bekannt. Die Anordnung umfasst ferner einen Mikrocontroller, der einen Regler mit Soll-/IstVergleich enthält, in welchem die einer Solldrehzahl entsprechenden Sollwerte mit Istwerten verglichen werden, in welchem weiterhin Messwerte einer Strom- und elektromotorische Kraft-Messung eingegeben und verarbeitet werden, wobei der Regler so ausgebildet ist, dass er auf einen durch schnellen Lastanstieg verursachten Drehzahlabfall des Motors reagiert und das Drehmoment des Motors wegschaltet, bevor dieser zum Stillstand gekommen ist, wobei durch Aufschalten von kurzen Impulsen ein Stillstand des Werkzeuges verhindert wird.

Weiterhin wird in DE 100 30 114 A1 ein Handstück für medizinische Zwecke mit einem im vorderen Endbereich des Handstücks angeordneten Werkzeughalter beschrieben. Das Handstück weist eine Haltekupplung zum lösbaren Fixieren eines Werkzeugs im Werkzeughalter und eine sich längs durch das Handstück erstreckende Antriebsverbindung für einen Dreh- und/oder Hubantrieb des Werkzeughalters auf, wobei eine Einrichtung vorgesehen ist zum Begrenzen eines auf den Werkzeughalter übertragbaren maximalen Drehmomentwertes auf einen geringeren Drehmomentwert, wobei die Einrichtung durch eine Einstellvorrichtung wahlweise abschaltbar und wieder einschaltbar ist.

Auch in WO 2013/076102 A2 wird eine medizinische Behandlungsvorrichtung beschrieben, die eine Einrichtung zum Begrenzen eines auf den Werkzeughalter übertragbaren maximalen Drehmomentwertes auf einen geringeren Drehmomentwert aufweist.

Schließlich ist aus DE 100 61 900 A1 ein zahnärztliches Instrument mit einem angetriebenen Werkzeug bekannt, wobei eine Übertragungseinrichtung mit mindestens einem magnetischen und/oder magnetisierbaren Kupplungselement vorgesehen ist und wobei Mittel zur Beeinflussung des Übertragungsmomentes des magnetischen und/oder magnetisierbaren Kupplungselements vorgesehen sind.

Zahnärztliche Instrumente mit Hohl- und Planetenrädern sind aus der US 2014/318287 A1, der US 2006/121412 A1 sowie der US 5 975 900 A bekannt.

Aufgabe der vorliegenden Erfindung ist es, ein Instrument bereitzustellen, mit dem das Drehmoment eines Getriebes sehr einfach einstellbar oder zumindest begrenzbar ist.

### Darstellung der Erfindung

Die Lösung der vorgenannten Aufgabe erfolgt anhand der Merkmale des Patentanspruchs 1. Vorteilhafte Ausführungsformen der Erfindung sind Gegenstand der abhängigen Ansprüche.

Das erfindungsgemäße zahnärztliche Instrument weist ein Getriebe zum Antrieb eines Werkzeugs auf, wobei das Getriebe in einem Getriebegehäuse angeordnet ist. Das Getriebe enthält mindestens eine Getriebestufe, die mindestens ein Hohlrad enthält, wobei im Inneren des Getriebegehäuses mindestens eine Drehmomentbegrenzungsvorrichtung angeordnet ist. Mittels der Drehmomentbegrenzungsvorrichtung kann das vorrichtung weist ein unter Vorspannung stehendes Federelement auf, zumindest teilweise mit dem Hohlrad in Kontakt ist und dieses an dem Getriebegehäuse zur Anlage bringt, um so das Drehmoment zu verändern oder zumindest zu begrenzen, wobei das Hohlrad zur Drehmomentbegrenzung gegenüber dem Getriebegehäuse gegen die Vorspannung durchrutschend ausgebildet ist.

Von Vorteil bei dieser Drehmomentbegrenzungsvorrichtung ist, dass diese einfach und kompakt aufgebaut und sehr robust ist. Daher kann die Drehmomentbegrenzungsvorrichtung auch bei sehr hohen Drehzahlen eingesetzt werden. Da sich die Drehmomentbegrenzungsvorrichtung im Getriebegehäuse befindet, ist diese wenig störfällig. Da die Drehmomentbegrenzungsvorrichtung sehr einfach und kompakt aufgebaut ist, kann sie bei Bedarf einfach ausgebaut und durch eine neue Drehmomentbegrenzungsvorrichtung ersetzt werden. Solche Federelemente sind kostengünstig und gut verfügbar. Des Weiteren lässt sich der Arbeitsbereich sehr genau einstellen. Vorteilhaft ist ferner, dass es eine Vielzahl von Federelementen gibt, die eingesetzt werden können. So können beispielsweise neben Wellfedern, Druckfedern oder Blattfedern auch Gasfedern verwendet werden.

In einer bevorzugten Ausführungsform weist das Getriebe eine einzige Getriebestufe auf und das Getriebe ist dabei ein Exzentergetriebe und das Hohlrad ist Teil des Exzentergetriebes. Vorteilhaft ist dabei, dass das Getriebe sehr einfach aber robust aufgebaut ist, da es nur eine Stufe aufweist.

In einer weiteren bevorzugten Ausführungsform enthält das Getriebe zwei oder mehr Getriebestufen und ist als ein Planetengetriebe ausgebildet. Dieses Planetengetriebe weist mindestens ein durchrutschendes Hohlrad auf. Jede der Getriebestufen enthält mindestens ein Planetenrad, wobei dieses Planetenrad zwischen einem Sonnenrad und dem Hohlrad angeordnet ist und wobei das Hohlrad mit der Drehmomentbegrenzungsvorrichtung in Kontakt bringbar ist. Steht die Drehmomentbegrenzungsvorrichtung mit dem Hohlrad in Kontakt, so wird das Drehmoment begrenzt. Vorzugsweise weist jede Stufe des Getriebes drei Planetenräder auf. Bevorzugt enthält das Planetengetriebe ein bis drei Stufen auf, wobei das Planetengetriebe besonders bevorzugt zwei Stufen besitzt. Dadurch ist das Planetengetriebe sehr kompakt aufgebaut.

In einer weiteren vorteilhaften Ausführungsform sind in dem Planetengetriebe weitere Hohlräder vorgesehen, in denen jeweils mindestens eine Getriebestufe vorgesehen ist, wobei diese weiteren Hohlräder fest in dem Getriebegehäuse angeordnet sind. Vorzugsweise sind in diesen weiteren fest angeordneten Hohlrädern zwei oder mehr Getriebestufen vorgesehen. Durch das Bereitstellen mehrerer Hohlräder kann eine viel größere Anzahl von Übersetzungsverhältnissen realisiert werden.

In einer besonderen Ausführungsform weist jede Getriebestufe das gleiche Modul auf. Das Modul liegt dabei zwischen 0,1 mm und 0,7 mm und vorzugsweise zwischen 0,15 mm und 0,3 mm, bei einem Exzentergetriebe vorzugsweise zwischen 0,2 und 0,5 mm. Weisen die Getriebestufen das gleiche Modul auf, so handelt es sich um eine sehr kostengünstige Ausführung.

In einer weiteren vorteilhaften Ausführungsform ist eine zweite Drehmomentbegrenzungsvorrichtung vorgesehen, die ebenfalls im Inneren des Getriebegehäuses angeordnet ist, wobei das Federelement zumindest teilweise mit einem dem ersten Ende gegenüberliegenden Ende des Hohlrads in Kontakt bringbar ist. Durch das Bereitstellen einer zweiten Drehmomentbegrenzungsvorrichtung kann das Drehmoment noch präziser eingestellt werden. Da durch Bereitstellen einer zweiten Drehmomentbegrenzungsvorrichtung der nutzbare Federweg verdoppelt wird, ist diese Variante mit einer zweiten Drehmomentbegrenzungsvorrichtung kaum störanfällig.

In einer anderen bevorzugten Ausführungsform ist ein Gegenhalter vorgesehen, an dem das Federelement der Drehmomentbegrenzungsvorrichtung derart angebracht ist, dass das Federelement zwischen dem Ende des Hohlrads und dem Gegenhalter angeordnet ist. Der Gegenhalter ist dabei fest in dem Getriebegehäuse angebracht. Vorteilhaft ist allerdings, wenn der Gegenhalter bei der Montage in das Getriebegehäuse noch verschiebbar ist, da er so optimal in dem Getriebegehäuse angeordnet werden und so die Federkraft der Federelemente vor der Inbetriebnahme des Instruments auf den gewünschten Wert eingestellt werden kann. Anschließend wird der Gegenhalter verdreh- und verschiebefest mit dem Getriebegehäuse verbunden, so dass er nicht mehr verstellt werden kann. Wenn der Gegenhalter fest in dem Getriebegehäuse angeordnet ist, hat dies den Vorteil, dass das Drehmoment von vorneherein fest eingestellt ist. Eine Manipulation von außen, beispielsweise durch Verstellen der Drehmomentbegrenzungsvorrichtung während des Betriebs des dentalen Instruments, ist daher nicht möglich.

In einer weiteren bevorzugten Ausführungsform ist wiederum ein Gegenhalter vorgesehen, an dem das Federelement der Drehmomentbegrenzungsvorrichtung angebracht ist. Dabei ist das Federelement zwischen dem Ende des Hohlrads und dem Gegenhalter angeordnet, wobei der Gegenhalter in dem Getriebegehäuse angeordnet ist. Der Gegenhalter ist Teil eines Verstellglieds, mit dem die Federkraft des Federelements und damit das Drehmoment verändert werden kann. Vorteilhaft bei dieser Variante ist, dass bei Bedarf mittels des Verstellglieds die Drehmomentbegrenzungsvorrichtung verstellt und damit das Drehmoment verändert werden kann. Von Vorteil ist dabei, dass das Drehmoment auch während des Betriebs neu eingestellt bzw. justiert werden kann.

In einer besonders bevorzugten Ausführungsform weist das Verstellglied einen Hebel auf, der außerhalb des Getriebegehäuses angeordnet ist. Dieser Hebel ist über ein vorzugsweise als Stift ausgebildetes Verbindungsmittel mit dem Gegenhalter verbunden. Da der Hebel außerhalb des Getriebegehäuses angeordnet und deshalb für einen Benutzer zugänglich ist, kann die Drehmomentbegrenzungsvorrichtung jederzeit von dem Benutzer verstellt und somit das Drehmoment - auch während das Instrument in Betreib ist - verändert werden. Vorteilhaft ist dabei, dass der Benutzer bequem an den Hebel des Verstellglieds kommt, ohne dass er beispielsweise das Getriebegehäuse öffnen muss, um die Drehmomentbegrenzungsvorrichtung zu verstellen.

Vorzugsweise weist das Getriebegehäuse eine Bohrung auf, in der das Verbindungsmittel eingebracht ist, das den Hebel mit dem Gegenhalter verbindet. Eine solche Bohrung lässt sich sehr einfach in dem Getriebegehäuse einbringen, womit es sich um eine kostengünstige Bauweise handelt.

In einer anderen bevorzugten Ausführungsform besitzt das Verstellglied ein Gewinde, das mit einem Verstellgewinde in Verbindung steht, das in einer in dem Getriebegehäuse angeordneten Nut sitzt. Da solche Gewinde sehr einfach herzustellen sind, handelt es sich um eine kostengünstigere Variante, mit der die Drehmomentbegrenzungsvorrichtung verstellt werden kann. Ferner kann mit einem solchen Gewinde das Drehmoment sehr genau eingestellt werden.

In einer weiteren bevorzugten Ausführungsform ist bei dem dentalen Instrument die mindestens eine Drehmomentbegrenzungsvorrichtung über das Federelement mit einem Verstellglied verbunden, wobei das Verstellglied zumindest teilweise in einer umlaufenden Nut sitzt. Diese Nut ist an einer Außenseite des Getriebegehäuses eingebracht. Da das Verstellglied zumindest teilweise in der Nut angeordnet ist, ist das Verstellglied ausreichend fest an dem Getriebegehäuse fixiert, um nicht durch Erschütterungen, denen es während des Betriebs des Instruments ausgesetzt ist, ungewollt verstellt wird. Damit wird erreicht, dass das Drehmoment während des Betriebs nur verändert werden kann, wenn dies ein Benutzer durch Verstellen des Verstellglieds veranlasst.

In einer weiteren bevorzugten Ausführungsform des zahnärztlichen Instruments schließt sich die Nut, in der das Verstellglied zumindest teilweise eingebracht ist, an eine radial verlaufende Bohrung an. In dieser Bohrung ist das Federelement derart angeordnet, dass das Federelement mit einer Außenfläche des Hohlrads in Kontakt bringbar ist. Bei dieser Ausführungsform handelt es sich um eine weitere Variante, mit der das Drehmoment einfach mittels der Drehmomentbegrenzungsvorrichtung begrenzt werden kann.

Vorzugsweise ist das Verstellglied eine Stellschraube, weil es sich bei einer Stellschraube um ein einfaches und sehr preiswertes Bauteil handelt.

In einer besonders bevorzugten Ausführungsform wird an dem Federelement eine Scheibe angebracht, wobei die Scheibe zwischen dem Federelement und dem Hohlrad angeordnet ist. Damit steht das Hohlrad mit der Scheibe und nicht mit dem Federelement in Kontakt. Dadurch wird verhindert, dass das Federelement das Hohlrad oder aber das Hohlrad das Federelement beschädigt, was möglich wäre, wenn Hohlrad und Federelement direkt miteinander in Kontakt gebracht werden würden.

In einer weiteren besonders bevorzugten Ausführungsform ist mindestens eine Drehmomentbegrenzungsvorrichtung vorgesehen, die mit der Außenfläche des Hohlrads in Kontakt bringbar ist und es ist mindestens eine weitere Drehmomentbegrenzungsvorrichtung vorgesehen, die mit einem Ende des Hohlrads in Kontakt bringbar ist. Durch Bereitstellen dieser zumindest zwei Drehmomentbegrenzungsvorrichtungen lässt sich das Drehmoment noch präziser einstellen, da sowohl an den Enden des Hohlrads als auch an der Außenfläche des Hohlrads Drehmomentbegrenzungsvorrichtungen vorgesehen sind.

### Kurzbeschreibung der Zeichnungen

Ausführungsbeispiele der Erfindung sind in den Zeichnungen dargestellt und im Folgenden näher erläutert. Es zeigen:
- Figur 1: ein Innenleben eines Teils eines Getriebes;
- Figur 2: eine schematische Darstellung des in Figur 1 dargestellten Teils des Getriebes;
- Figur 3: eine schematische Darstellung einer ersten Variante des in Figur 2 dargestellten Teils des Getriebes;
- Figur 4: eine schematische Darstellung einer zweiten Variante des in Figur 2 dargestellten Teils des Getriebes und
- Figur 5: eine schematische Darstellung einer dritten Variante des in Figur 4 dargestellten Teils des Getriebes.

### Ausführungsbeispiele

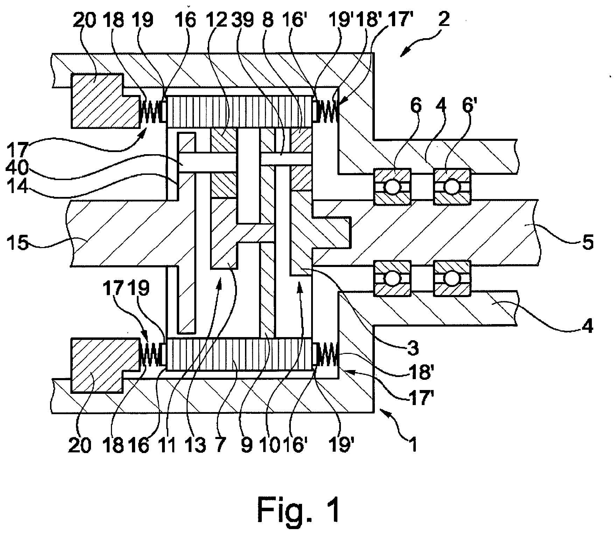

Die Figur 1 zeigt ein Innenleben eines Teils eines Getriebes 1 eines Instruments 2, wobei es sich bei dem Getriebe vorzugsweise um ein geschmiertes Getriebe 1 handelt. Mit dem Getriebe 1 kann ein an dem Instrument 2 angebrachtes Werkzeug (nicht dargestellt)in Bewegung versetzt werden. Bei diesem Instrument handelt es sich um ein zahnärztliches Instrument, womit es sich bei dem Werkzeug beispielsweise um eine Endo-Feile, einen Bohrer oder einen Fräser handeln kann.

Das Getriebe 1 ist als Planetengetriebe ausgebildet. Dieses Planetengetriebe 1 ist in einem Getriebegehäuse 4 untergebracht und weist ein erstes Sonnenrad 3 auf, das mit einer Welle 5 fest verbunden ist, wobei vorteilhafterweise das Sonnenrad 3 mit der Welle 5 einteilig ausgebildet ist. Die Welle 5 ist von außen in das Getriebegehäuse 4 eingeführt und wird durch Haltevorrichtungen 6, 6' in dem Getriebegehäuse 4 gehalten. Bei den Haltevorrichtungen handelt es sich bevorzugt um ein Kugellager. Das Hohlrad 7 ist vorzugsweise als durchrutschendes Hohlrad 7 in dem Getriebegehäuse 4 angeordnet. Das Hohlrad 7 sitzt lose in dem Getriebegehäuse 4 und weist eine Spielpassung auf.

Benachbart zu dem ersten Sonnenrad 3 ist ein erstes Planetenrad 8 angeordnet. Dieses erste Planetenrad 8 ist drehbar an einem ersten Zapfen 39 angebracht. Der Zapfen 39 ist an einem ersten Steg 9 drehfest angebracht, wobei der Zapfen 39 in den Steg 9 eingepresst sein kann und wobei das Planetenrad bzw. die Planetenräder des Planetengetriebes 1 auf dem ersten Zapfen 39 drehbar gelagert sind. Der Steg 9 sowie der Zapfen 39 können dabei auch einteilig sein. Sowohl das erste Sonnenrad 3 als auch das erste Planetenrad 8 sind als Zahnräder ausgebildet und stehen mit dem Hohlrad 7, das über eine Innenverzahnung verfügt, im Eingriff. Das Sonnenrad 3 sowie das an dem Steg 9 angebrachte Planetenrad 8 sind somit von dem Hohlrad 7 umgeben und bilden eine erste Stufe 10 des Planetengetriebes 1. Diese erste Stufe 10 weist noch weitere Planetenräder auf, die jedoch aufgrund der Darstellung des Getriebes 1 in der Figur 1 nicht zu sehen sind. Vorzugsweise weist die erste Stufe 10 insgesamt drei Planetenräder auf, wobei es denkbar ist, nur ein Planetenrad, zwei oder aber auch mehr als 3 Planetenräder vorzusehen. Diese weiteren Planetenräder sind ebenfalls jeweils zwischen dem Hohlrad 7 und dem Sonnenrad 3 angeordnet. Als Material für die einzelnen Bauteile des Getriebes 1 eigenen sich Keramik, Stahl oder auch Kunststoffe, beispielsweise Polyetheretherketon (PEEK). Da der Aufbau eines Planetengetriebes an sich bekannt ist, wird auf eine weitere detaillierte Beschreibung verzichtet.

An die erste Stufe 10 schließt sich eine zweite Stufe 11 an. Diese zweite Stufe 11 sitzt ebenfalls in dem Hohlrad 7 und umfasst weitere Planetenräder, wobei nur das Planetenrad 12 zu sehen ist, das zwischen einem zweiten Sonnenrad 13 und dem Hohlrad 7 angeordnet ist. Das Sonnenrad 13 ist drehfest an dem Steg 9 und das Planetenrad 12 drehbar an einem zweiten Zapfen 40 angebracht. Dabei ist der zweite Zapfen 40 am zweiten Steg 14 drehfest angebracht. An dem zweiten Steg 14 ist eine weitere Welle 15 angeordnet, mit der ein in Figur 1 nicht dargestelltes Werkzeug angetrieben werden kann. Auch die zweite Stufe 11 umfasst drei Planetenräder, wobei sie auch mehr oder weniger als drei Planetenräder umfassen kann. Vorteilhaft bei diesem Getriebe 1 mit zwei Stufen ist, dass eine hohe Über- bzw. Untersetzung erhalten werden kann.

An einem Ende 16 des Hohlrads 7 ist eine Drehmomentbegrenzungsvorrichtung 17 vorgesehen. Diese Drehmomentbegrenzungsvorrichtung 17 umfasst ein Federelement 18 und eine Scheibe 19, wobei das Federelement 18 an einem Gegenhalter 20 fixiert ist.

Obwohl auf die Scheibe 19 verzichtet werden könnte, so hat diese Scheibe 19 den Vorteil, dass das Hohlrad 7 mit der Scheibe 19 und nicht mit dem Federelement 18 in Kontakt steht. Dadurch wird verhindert, dass das Federelement 18 das Hohlrad 7 oder aber das Hohlrad 7 das Federelement 18 beschädigt.

An einem dem Ende 16 gegenüberliegenden Ende 16' des Hohlrads 7 ist eine zweite Drehmomentbegrenzungsvorrichtung 17' angeordnet, die wiederum ein Federelement 18' sowie eine Scheibe 19' umfasst, womit die erste Drehmomentbegrenzungsvorrichtung 17 und die zweite Drehmomentbegrenzungsvorrichtung 17' identisch aufgebaut sind.

Das lose in dem Getriebegehäuse 4 angeordnete Hohlrad 7 wird somit durch die beiden Drehmomentbegrenzungsvorrichtungen 17 und 17' gehalten. Da die Drehmomentbegrenzungsvorrichtungen 17, 17' Federelemente 18, 18' aufweisen, wird das Hohlrad 7 somit durch eine axial wirkende Federkraft gehalten. Die Federkraft der beiden Drehmomentbegrenzungsvorrichtungen 17, 17' wird bei der Montage der Drehmomentbegrenzungsvorrichtungen 17, 17' mit Hilfe eines Gewinderings, das Bestandteil des Gegenhalters 20 sein kann, eingestellt, wobei die Federkraft des Federelements 18 der Drehmomentbegrenzungsvorrichtung 17 bei Bedarf durch einen Benutzer mittels des Gegenhalters 20 verändert werden kann, falls der Gegenhalter 20 als Verstellglied ausgebildet ist. Ein Gewindering ist der Übersicht halber nicht gezeigt. Bei dieser Variante ist der Gegenhalter 20 jedoch so ausgebildet, dass er einmal initial, d.h. vor Inbetriebnahme des Instruments 2, eingestellt wird. Anschließend wird der Gegenhalter 20 verdreh- und verschiebefest mit dem Getriebegehäuse 4 verbunden, so dass er nicht mehr verstellt werden kann.

Wie bei der Drehmomentbegrenzungsvorrichtung 17 könnte bei der Drehmomentbegrenzungsvorrichtung 17' ebenfalls auf die Scheibe 19' verzichtet werden.

Möglich ist auch, dass nur eine Drehmomentbegrenzungsvorrichtung vorgesehen ist. In diesem Fall könnte beispielsweise auf die Drehmomentbegrenzungsvorrichtung 17' verzichtet werden, so dass das als durchrutschend ausgebildete Hohlrad 7 nur von der Drehmomentbegrenzungsvorrichtung 17 gehalten wird. Dies ist jedoch in Figur 1 nicht dargestellt.

Bei dem Planetengetriebe 1 handelt es sich um ein zweistufiges Getriebe, wobei die beiden Getriebestufen 10, 11 dasselbe Hohlrad 7 aufweisen.

Es versteht sich, dass das Planetengetriebe 1 auch nur eine Stufe aufweisen kann. In diesem Fall würde nur die Stufe 10 in dem Getriebegehäuse 4 untergebracht sein. Vorzugsweise ist bei einem einstufigen Getriebe das Getriebe als Exentergetriebe ausgebildet, was jedoch in der Figur 1 nicht dargestellt ist.

Allgemein gesprochen, kann das Planetengetriebe 1 somit als n-stufiges Planetengetriebe ausgebildet sein, wobei n die Anzahl der Stufen und n = 1, 2, 3, 4,... ist. Jede der n Stufen umfasst dabei ein Sonnenrad sowie mindestens ein Planetenrad, wobei jede der n Stufen in demselben Hohlrad angeordnet ist. Das mindestens eine Planetenrad ist jeweils zwischen dem Sonnenrad und dem Hohlrad angeordnet. Es versteht sich, dass jede Stufe auch mehr als ein Planetenrad enthalten kann, wobei vorzugsweise drei Planetenräder pro Stufe vorgesehen sind.

Vorteilhaft bei einem Getriebe mit zwei oder mehr Stufen ist, dass dieses Getriebe nicht nur eine kostengünstige Variante darstellt sondern dass ein Getriebe mit einer hohen Unter- und Übersetzung bereitgestellt wird.

Um das Drehmoment des Planetengetriebes 1 zu kontrollieren bzw. zu begrenzen, ist die Drehmomentbegrenzungsvorrichtung 17 an dem Ende 16 des Hohlrads 7 angebracht. Dabei kann es sich bei der Drehmomentbegrenzungsvorrichtung 17 um eine feststehende oder um eine verstellbare Drehmomentbegrenzungsvorrichtung handeln. Ist die Drehmomentbegrenzungsvorrichtung 17 - wie dies in der vorliegenden Variante gemäß Figur 1 der Fall ist - eine feststehende Drehmomentbegrenzungsvorrichtung, so weist das Federelement 18 eine definierte Vorspannung auf. Mit dieser definierten Vorspannung steht die Drehmomentbegrenzungsvorrichtung 17 mit dem Hohlrad 7 in Kontakt. Aufgrund dieser Federkraft liegt die Haftreibung höher als die im normalen Betrieb auftretenden Kräfte, so dass das Hohlrad 7 stillstehen bleibt. Mit dieser feststehenden Drehmomentbegrenzungsvorrichtung 17 kann somit ein gewünschtes Drehmoment eingestellt werden.

Ist die Drehmomentbegrenzungsvorrichtung 17 hingegen verstellbar, so geschieht dies beispielsweise über den Gegenhalter 20, der in Richtung des Hohlrads 7 bewegt oder von dem Hohlrad 7 fortbewegt werden kann (nicht dargestellt).

In diesem Fall wird die Federkraft des Federelements 18 vorzugsweise mittels eines Verstellglieds verstellt, wodurch sich auch das Drehmoment verändert.

Die Federelemente 18 und 18' können dabei als Wellfedern ausgebildet sein. Anstelle einer Wellfeder kann jedoch auch ein anderer Federtyp eingesetzt werden, zum Beispiel eine Blattfeder, eine Druckfeder oder eine Gasfeder.

Je nachdem wie stark die Drehmomentbegrenzungsvorrichtung 17 mittels des verstellbaren Gegenhalters 20 gegen das Hohlrad 7 gepresst wird, ändert sich auch das Drehmoment.

Für einen Fachmann ist klar, dass das Hohlrad 7 somit drehmomentabhängig in dem Getriebegehäuse 4 fixiert ist.

Denkbar ist auch, dass anstelle der beiden Drehmomentbegrenzungsvorrichtungen 17, 17' je eine verstellbare Spange (nicht dargestellt) als Drehmomentbegrenzungsvorrichtung zum Einsatz kommt. Die erste Spange umgreift dabei das Ende 16 und die zweite Spange umgreift das Ende 16' des Hohlrads 7, so dass das Hohlrad 7 in dem Getriebegehäuse 4 durch die beiden Spangen gehalten wird. Da die Spangen verstellbar sind, kann somit das im Getriebe maximal wirkende Drehmoment durch die Spangen begrenzt werden.

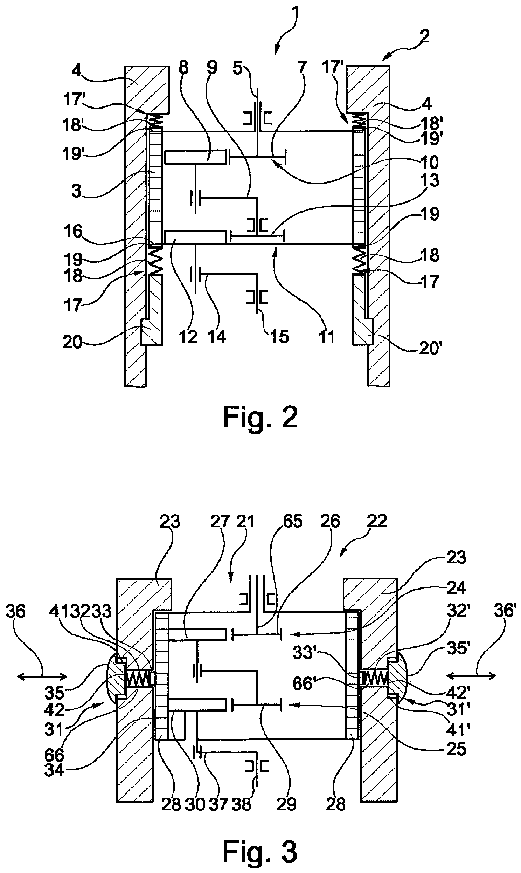

In Figur 2 ist eine schematische Darstellung des in Figur 1 gezeigten Teils des als Planetengetriebe ausgestalteten Getriebes 1 des dentalen Instruments 2 gezeigt. In dem Getriebegehäuse 4 sind die erste sowie die zweite Stufe 10, 11 des Getriebes 1 untergebracht. Die erste Stufe 10 wird von dem Sonnenrad 3, dem Planetenrad 8 sowie dem Hohlrad 7 und die zweite Stufe 11 von dem Sonnenrad 13, dem Planetenrad 12 sowie dem Hohlrad 7 gebildet.

An dem ersten Ende 16 des Hohlrads 7 ist die Drehmomentbegrenzungsvorrichtung 17 angeordnet. Diese Drehmomentbegrenzungsvorrichtung 17 enthält das Federelement 18 sowie die Scheibe 19, wobei das Federelement 18 an dem Gegenhalter 20 fixiert ist. Die Drehmomentbegrenzungsvorrichtung 17 liegt mit der Scheibe 19 an dem Ende 16 des Hohlrads 7 an. Je nachdem wie stark die Drehmomentbegrenzungsvorrichtung 17 gegen das Hohlrad 7 gepresst wird, ändert sich auch das Drehmoment. Wird die Drehmomentbegrenzungsvorrichtung 17 von dem Hohlrad 7 entfernt, so wird die Drehbewegung des Hohlrads 7 nicht abgebremst und es kann kein Drehmoment übertragen werden, das heißt die Welle 15 bleibt stehen.

An dem zweiten Ende 16' des Hohlrads 7, das dem ersten Ende 16 gegenüber liegt, ist die zweite Drehmomentbegrenzungsvorrichtung 17' angeordnet, die das Federelement 18' sowie die Scheibe 19' umfasst, womit der Aufbau der ersten Drehmomentbegrenzungsvorrichtung 17 dem Aufbau der zweiten Drehmomentbegrenzungsvorrichtung 17' entspricht.

Möglich ist auch, dass nur eine Drehmomentbegrenzungsvorrichtung vorgesehen ist. In diesem Fall könnte auf die zweite Drehmomentbegrenzungsvorrichtung 17' und damit auf des Federelements 18' verzichtet werden, so dass das als durchrutschend ausgebildete Hohlrad 7 nur von der Drehmomentbegrenzungsvorrichtung 17 gehalten wird. Dies ist jedoch in Figur 2 nicht dargestellt.

Im dem Hohlrad 7 weisen die verschiedenen Stufen 10, 11 die gleichen Module auf. Diese Module (nach DIN 780) können zwischen 0,1 mm und 0,7 mm und vorzugsweise zwischen 0,15 mm und 0,3 mm liegen. Dabei ist es natürlich möglich, dass die Getriebestufen 10 und 11 unterschiedliche Module aufweisen. Weist das Getriebe nur eine Stufe auf, so ist dieses Getriebe vorzugsweise als Exzentergetriebe ausgebildet und weist Module (nach DIN 780) auf, die zwischen 0,1 mm bis 0,7 mm und vorzugsweise zwischen 0,2 bis 0,5 mm liegen. Das Exzentergetriebe weist ebenfalls ein Hohlrad auf. Wie auch bei dem Hohlrad des Planetengetriebes können auch am Hohlrad des Exzentergetriebes Drehmomentbegrenzungsvorrichtungen vorgesehen werden, die an zumindest einem Ende des Hohlrads angeordnet sind.

Figur 3 zeigt eine schematische Darstellung einer ersten Variante 21 des in Figur 1 dargestellten Teils des Planetengetriebes. Auch dieses Planetengetriebe 21 ist Teil eines dentalen Instruments 22, wobei mit dem Planetengetriebe 21 ein an dem Instrument 22 angebrachtes Werkzeug (nicht dargestellt) in Bewegung versetzt werden kann. Das Werkzeug kann beispielsweise eine Endo-Feile, ein Bohrer oder ein Fräser sein. In Figur 3 besitzt das Getriebe 21 ebenfalls mehr als eine Stufe. Es ist klar, dass dieses Getriebe auch nur eine Stufe aufweisen kann, wobei dieses Getriebe dann nicht als Planetengetriebe sondern vorzugsweise als Exzentergetriebe ausgebildet ist.

Das Planetengetriebe 21 sitzt in einem Getriebegehäuse 23 und umfasst eine erste Stufe 24 und eine zweite Stufe 25. Die erste Stufe 24 wird von einem Sonnenrad 26, das an einer Welle 65 angeordnet ist, einem Planetenrad 27 sowie einem Hohlrad 28 gebildet. Die zweite Stufe 25 wird von einem Sonnenrad 29, einem Planetenrad 30, dem Hohlrad 28, einem Steg 37 und einer Welle 38 gebildet. Das Planetengetriebe 21 weist weitere Planetenräder auf, die jedoch in der Figur 3 nicht zu sehen sind. Vorzugsweise umfasst das Planetengetriebe 21 zwei weitere Planetenräder, womit das Planetengetriebe 21 insgesamt drei Planetenräder enthält. Denkbar ist aber auch, dass das Planetengetriebe 21 nur ein Planetenrad oder aber zwei oder mehr als drei Planetenräder umfasst. Das Planetengetriebe 21 weist dabei vorzugsweise bei Überlast ein durchrutschendes Hohlrad 28 auf. Insofern unterscheidet sich das Planetengetriebe 21 nicht von dem in Figur 2 dargestellten Planetengetriebe.

Auch bei dem Getriebe 21 weisen die verschiedenen Getriebestufen 24, 25 die gleichen Module (nach DIN 780) auf, wobei es natürlich auch möglich ist, dass die Getriebestufen unterschiedliche Module besitzen. Die Module können dabei Werte von 0,1 mm bis 0,7 mm und vorzugsweise von 0,15 mm bis 0,3 mm annehmen. Weist das Getriebe 21 nur eine Stufe auf, so ist dieses vorzugsweise als Exzentergetriebe ausgebildet und weist Module (nach DIN 780) auf, die zwischen 0,1 mm und 0,7 mm und vorzugsweise zwischen 0,2 und 0,5 mm liegen.

Das Hohlrad 28 in Figur 3 ist mit seiner Außenfläche 34 in dem Getriebegehäuse 23 gleitgelagert und hat Spiel.

Zu erkennen ist auch eine erste Drehmomentbegrenzungsvorrichtung 31 sowie eine ihr gegenüberliegende zweite Drehmomentbegrenzungsvorrichtung 31', mit denen das Drehmoment des Planetengetriebes 21 kontrolliert werden kann. Dazu sind die Drehmomentbegrenzungsvorrichtungen 31 und 31' als verstellbare Vorrichtungen ausgebildet und zumindest teilweise in dem Getriebegehäuse 23 angeordnet. Die erste Drehmomentbegrenzungsvorrichtung 31 umfasst ein Federelement 32 sowie eine Scheibe 33, wobei die Scheibe 33 mit der Außenfläche 34 des Hohlrads 28 in Kontakt gebracht werden kann. Dazu weist die Drehmomentbegrenzungsvorrichtung 31 ein Verstellglied 35 auf, mit dem die Drehmomentbegrenzungsvorrichtung 31 in Richtung der Außenfläche 34 des Hohlrads 28 hinbewegt oder von dieser fortbewegt werden kann, was durch einen Doppelpfeil 36 angedeutet ist. Das Verstellglied 35 sitzt zumindest teilweise in einer umlaufenden Nut 41, die in einer Außenseite des Getriebegehäuses 23 eingebracht ist. An diese Nut 41 schließt sich eine radial verlaufende Bohrung 66 zum Aufnehmen des Federelements 32 an.

Entsprechend ist auch die zweite Drehmomentbegrenzungsvorrichtung 31' aufgebaut. Auch sie weist ein Verstellglied 35' auf, das zumindest teilweise in einer umlaufenden Nut 41' sitzt, wobei die Nut 41' in der Außenseite des Getriebegehäuses 23 angeordnet ist. An die Nut 41' schließt sich eine radial verlaufende Bohrung 66' an, in dem ein Federelement 32' eingebracht ist. An dem Federelemente 32' ist eine Scheibe 33' angeordnet, wobei die Scheibe 33' mit der Außenfläche 34 des Hohlrads 28 in Kontakt gebracht werden kann (Doppelpfeil 36'). Das Federelement 32' sitzt zumindest teilweise in der Bohrung 66'.

Vorzugsweise ist das Verstellglied 35, 35' eine Stellschraube, weil eine Stellschraube ein einfaches und sehr preiswertes Bauteil ist.

Wird die Drehmomentbegrenzungsvorrichtung 31 mittels des Verstellglieds 35 in Richtung der Außenfläche 34 des Hohlrads 28 bewegt, so dass die Scheibe 33 mit dem Hohlrad 28 in Kontakt kommt, so wird die Drehbewegung des Hohlrads 28 unterbrochen. Je stärker zugestellt wird, desto höher ist das Auslöse-Drehmoment des Hohenrads 28. Vorteilhaft bei dieser Variante ist somit, dass mittels der Verstellglieder 35, 35' das Drehmoment des Planetengetriebes 21 sehr genau eingestellt werden kann.

Bei den Drehmomentbegrenzungsvorrichtungen 31, 31' kann natürlich auch auf die entsprechende Scheibe 33, 33' verzichtet werden. Jedoch verhindern die Scheiben 33, 33', dass das Federelement 32 bzw. das Federelement 32' das Hohlrad 28 oder aber das Hohlrad 28 das Federelement 32 bzw. das Federelement 32' beschädigen, wenn diese direkt miteinander in Kontakt gebracht werden.

Vorzugsweise weisen die beiden Verstellglieder 35, 35' eine exzentrische Fläche 42, 42' auf, mit der das entsprechende Federelement 32, 32' in Verbindung steht. Wenn die Verstellglieder 35, 35' verstellt werden, zum Beispiel durch Drehen dieser Verstellglieder 35, 35', so wird die Vorspannung der Federelemente 32, 32' und damit das übertragene Drehmoment verändert. Dabei sind die Verstellglieder 35, 35' vorzugsweise gleichzeitig verstellbar, so dass von beiden Verstellgliedern 35, 35' die gleiche Federkraft auf das Hohlrad 28 wirkt. Wie in Figur 3 zu sehen, sind die Verstellglieder 35, 35' von außen zugänglich, womit das Drehmoment von außen durch einen Benutzer eingestellt bzw. verändert werden kann. Da zwei Drehmomentbegrenzungsvorrichtungen 31, 31' vorgesehen sind und die Federelemente 32, 32' dieser Drehmomentbegrenzungsvorrichtungen 31, 31' zudem symmetrisch angeordnet sind, kann das Hohlrad 28 ein merkliches Spiel haben.

Ein Fachmann kann natürlich die Verstellglieder 35, 35' auch derart in dem Getriebegehäuse 23 anordnen, dass diese nicht von außen zugänglich sind. Bevorzugt ist jedoch die Variante, bei der die Verstellglieder 35, 35' von außen zugänglich sind und von einem Benutzer einfach verstellt werden können.

Handelt es sich bei dem Getriebe um ein Exzentergetriebe, so können die Drehmomentbegrenzungsvorrichtungen ebenfalls an der Außenfläche des Hohlrads des Exzentergetriebes angeordnet sein. Diese Variante ist jedoch in Figur 3 nicht dargestellt.

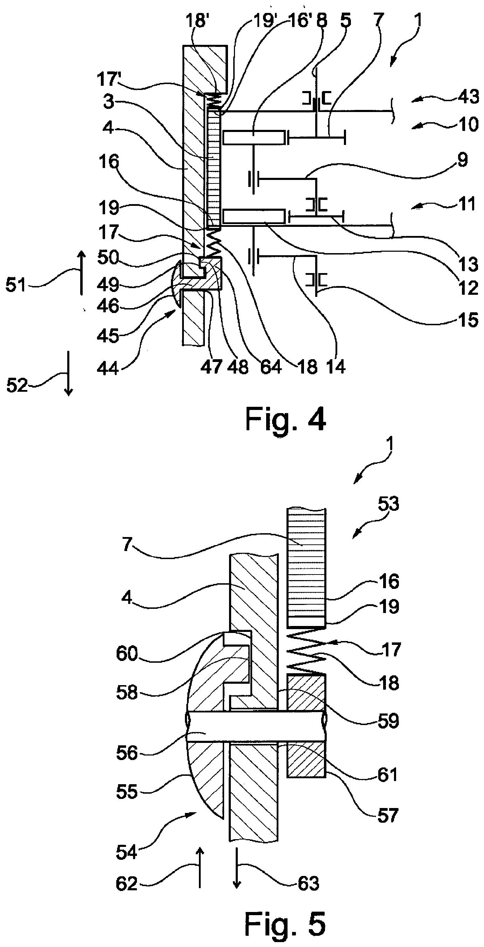

Figur 4 zeigt eine schematische Darstellung einer ersten Variante des in Figur 2 dargestellten Teils des Getriebes, wobei nur ein Teil des Getriebes dargestellt ist. Das Getriebe 43 gemäß Figur 4 ist ebenfalls in dem dentalen Instrument 1 eingebaut und entspricht in seinem Aufbau im Wesentlichen dem Getriebe nach Figur 2, weshalb die Bezugszahlen der einzelnen Bestandteile des Getriebes 1 beibehalten wurden. Auch das Getriebe 43 ist in dem Getriebegehäuse 4 untergebracht und enthält die erste sowie die zweite Getriebestufe 10, 11. Die erste Stufe 10 wird von dem Sonnenrad 3, dem Planetenrad 8 sowie dem Hohlrad 7 und die zweite Stufe 11 von dem Sonnenrad 13, dem Planetenrad 12 sowie dem Hohlrad 7 gebildet.

An dem Ende 16 des Hohlrads 7 ist die Drehmomentbegrenzungsvorrichtung 17 und an dem gegenüberliegendem Ende 16' die Drehmomentbegrenzungsvorrichtung 17' angeordnet. Die Drehmomentbegrenzungsvorrichtungen 17, 17' weisen beide jeweils das Federelement 18 bzw. 18' sowie die Scheibe 19 bzw. 19' auf. Der Aufbau der ersten Drehmomentbegrenzungsvorrichtung 17 entspricht somit wiederum dem Aufbau der Drehmomentbegrenzungsvorrichtung 17'. Die Federelemente 18 und 18' können zum Beispiel Wellfedern, Blattfedern, Gasfedern oder Druckfedern sein.

Das Federelement 18 ist an einem Verstellglied 44 fixiert. Das Verstellglied 44 ist einteilig ausgebildet und umfasst einen von außen zugänglichen Hebel 45, an dem ein Verbindungsmittel 46, vorzugsweise ein Stift 46 angeordnet ist. Das Verbindungsmittel 46 ist in einer in dem Getriebegehäuse 4 eingebrachten Bohrung 47 eingebracht. An dem Verbindungsmittel 46 ist ein Gegenhalter 64 vorgesehen, an dem das Federelement 18 der Drehmomentbegrenzungsvorrichtung 17 angeordnet ist. Das Verstellglied 44 weist ein Gewinde 48 auf, das in ein Verstellgewinde 49 eingreift, das in einer Nut 50 angeordnet ist, wobei die Nut 50 in einer Innenseite des Getriebegehäuses 4 sitzt. In Figur 4 ist das Gewinde 48 an dem Gegenhalter 64 angebracht. Wird das Verstellglied 44 in Richtung des Hohlrads 7, d.h. in Richtung des Pfeils 51 bewegt, so wird auch die Drehmomentbegrenzungsvorrichtung 17 in Richtung des Hohlrads 7, d.h. in axialer Richtung, bewegt. Wird hingegen das Verstellglied 44 in Richtung des Pfeils 52 bewegt, so wird die Drehmomentbegrenzungsvorrichtung 17 von dem Hohlrad 7 fortbewegt. Durch Verstellen des Verstellglieds 44 kann somit die Federkraft der entsprechenden Federelemente 18, 18' und damit das Drehmoment verändert werden.

Das Getriebe 43 unterscheidet sich somit von dem Getriebe gemäß Figur 1 nur dadurch, dass anstelle eines festsehenden Gegenhalters ein Verstellglied 44 vorgesehen ist, mit dem die Drehmomentbegrenzungsvorrichtung 17 bewegt und so das Drehmoment veränderbar ist.

Figur 5 eine schematische Darstellung einer zweiten Variante des in Figur 4 dargestellten Teils des Getriebes gezeigt. Dieses Getriebe 53 unterscheidet sich von dem in Figur 4 dargestellten Getriebe nur durch den Aufbau des Verstellglieds. So weist das Getriebe 53 ein Verstellglied 54 auf, das mehrteilig aufgebaut ist. Das Verstellglied 54 enthält einen Hebel 55, der über ein vorzugsweise als Stift ausgebildetes Verbindungsmittel 56 mit einem Gegenhalter 57 verbunden ist, wobei das Verbindungsmittel 56 durch eine Bohrung 61 durchgeführt ist, die in das Getriebegehäuse 4 eingebracht ist. An dem Hebel 55 ist die Drehmomentbegrenzungsvorrichtung 17 bestehend aus Federelement 18 und Scheibe 19 angeordnet. Das Verstellglied 54 weist ein Gewinde 58 auf, das in ein Verstellgewinde 59 eingreift, das in einer Nut 60 angeordnet ist, die an einer Außenseite des Getriebegehäuses 4 sitzt. Das Gewinde 48 des Verstellglieds 54 ist an dem Hebel 55 angeordnet.

Durch Verstellen des Verstellglieds 54 kann das Drehmoment verändert werden.

Wird das Verstellglied 54 in Richtung des Hohlrads 7, d.h. in Richtung des Pfeils 62 und damit in die axiale Richtung bewegt, so wird dadurch die Drehmomentbegrenzungsvorrichtung 17 ebenfalls in Richtung des Hohlrads 7 bewegt. Wird das Verstellglied 54 hingegen in Richtung des Pfeils 63 bewegt, so wird die Drehmomentbegrenzungsvorrichtung 17 von dem Hohlrad 7 wegbewegt.

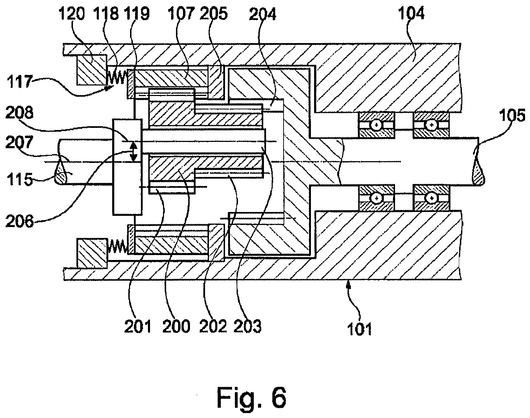

Die Wirkweise eines in einem Getriebegehäuse 104 angeordneten Exzentergetriebes mit integrierter Drehmomentbegrenzung wird in Fig. 6 erläutert.

Auf einer Antriebswelle 115 ist ein Zapfen 203 mit einer Mittelachse 208 derart angeordnet, dass die Mittelachse 208 einen Abstand 206 zur zentralen Achse 207 aufweist und der Zapfen 203 demnach zur zentralen Achse 207 exzentrisch angeordnet ist. Auf dem Zapfen 203 sind zwei Planetenräder 201 und 202 als sogenanntes Doppelrad 200 angeordnet, sind also zueinander verdrehfest angeordnet. Das außenverzahnte erste Planetenrad 201 kämmt mit einem innenverzahnten ersten Hohlrad 107. Das außenverzahnte zweite Planetenrad 202 kämmt mit einem innenverzahnten zweiten Hohlrad 204.

Nach dem bekannten Stand der Technik wäre das innenverzahnte erste Hohlrad 107 verdrehfest mit dem Gehäuse 104 verbunden und das innenverzahnte zweite Hohlrad 204 ist mit einer Abtriebswelle 105 verbunden. Wird die Antriebswelle 115 in Drehung versetzt, führt der Zapfen 203 eine Umlaufbewegung um die zentrale Achse 207 aus und nimmt dabei das Doppelrad 200 mit. Da das erste Planetenrad 201 mit dem innenverzahnten ersten Hohlrad 107 im Eingriff ist, führt das Doppelrad 200 neben der Umlaufbewegung um die Achse 207 zudem eine Drehbewegung um die eigene Achse 208 aus. Dabei stützt sich das erste Planetenrad 201 auf dem innenverzahnten ersten Hohlrad 107 ab und es entstehen am innenverzahnten ersten Hohlrad 107 Reaktionskräfte. Die überlagerte Umlauf-Drehbewegung des ersten Planetenrads 201 wird auf das zweite Planetenrad 202 übertragen. Das zweite Planetenrad 202 ist derart gestaltet, dass während der Umlauf-Drehbewegung des zweiten Planetenrades 202 dieses permanent mit dem innenverzahnten zweiten Hohlrad 204 im Eingriff steht und das innenverzahnte zweite Hohlrad 204 in Drehung versetzt. Bei kleinen Zähnezahldifferenzen zwischen den Hohlrädern 107, 204 und den Planetenrädern 201, 202 lassen sich auf kompakte Weise große Gesamtübersetzungen realisieren. Die am innenverzahnten ersten Hohlrad 107 angreifenden Reaktionskräfte werden im Stand der Technik von dem Gehäuse 104 aufgenommen.

Wird das innenverzahnte erste Hohlrad 107 mit einer Drehmomentbegrenzungsvorrichtung 117 gegen ein mit Gehäuse 104 zusammenwirkenden Formelement 205 als Gegenhalter vorgespannt, kann das innenverzahnte erste Hohlrad 107 bei Überschreitung eines definierten Drehmomentes gegenüber dem Gehäuse 104 durchrutschen und somit als Drehmomentbegrenzung wirken. Die Drehmomentbegrenzungsvorrichtung 117 umfasst ein gegen einen mit dem Gehäuse 104 verbundenen, vorzugsweise einstellbaren Anschlag 120 abgestütztes Federelement 118, das an dem ersten Hohlrad 107 mittelbar, also unter Zuhilfenahme einer Anlagescheibe 119 anliegt. Unterhalb des maximalen Drehmoments wird das erste Hohlrad 107 im Gehäuse 104 über die Anlage an der Anlagescheibe 119 und am Formelement 205 festgehalten, wird das maximale Drehmoment überschritten, etwa weil die Abtriebswelle 105 und damit das zweite Hohlrad 204 blockiert ist, rutscht das erste Hohlrad gegenüber der Anlagescheibe 119 und dem Formelement 205 durch und dreht sich dabei um die Mittelachse 207. Die Drehbewegung des ersten Hohlrads 107 wird dadurch hergestellt, dass sich die Antriebswelle 115 dreht und damit auch der Zapfen 203 exzentrisch umläuft und bei diesem Umlauf auch das zweite Planetenrad 202 im blockierten zweiten Hohlrad 204 in Drehung versetzt. Die Drehrichtung des Doppelrades 200 ist der Drehrichtung der Antriebswelle 105 entgegengesetzt. Bei durchrutschendem ersten Hohlrad 107 ist die Kraftübertragung begrenzt und das erste Hohlrad 107 dreht sich unter Ausgleich eines Drehzahlunterschieds und ist vom ersten Planetenrad 201 angetrieben.

Ein Fachmann kann natürlich auch die Drehmomentbegrenzungsvorrichtungen gemäß den Figuren 2 bis 6 in einem Getriebe miteinander kombinieren. So ist es beispielsweise möglich, zumindest eine Drehmomentbegrenzungsvorrichtung vorzusehen, die mit der Außenfläche des Hohlrads in Kontakt steht, als auch die Drehmomentbegrenzungsvorrichtungen in dem Getriebegehäuse anzuordnen, die mit dem entsprechenden Ende des Hohlrads in Kontakt stehen. Dadurch lässt sich das Drehmoment noch präziser einstellen, da sowohl an den Enden des Hohlrads als auch an der Außenfläche des Hohlrads Drehmomentbegrenzungsvorrichtungen vorgesehen sind.

Obwohl in den Figuren nicht dargestellt, so kann jede der n Stufen des Planetengetriebes ein eigenes Hohlrad aufweisen. Einem dieser Hohlräder ist dabei wenigstens eine Drehmomentbegrenzungsvorrichtung zugeordnet, so dass das Drehmoment dieses Hohlrads mittels der mindestens einen korrespondierenden Drehmomentbegrenzungsvorrichtung kontrolliert werden kann. Die übrigen Hohlräder können dabei in das Getriebegehäuse eingepresst werden, wodurch sie drehfest in dem Gehäuse sitzen. Möglich ist aber auch, dass die übrigen Hohlräder lose in dem Getriebe angeordnet werden. Eine Kombination aus lose sowie drehfest in dem Getriebegehäuse angeordneten Hohlrädern ist ebenfalls denkbar. Diese entweder drehfest oder lose in dem Getriebe angeordneten weiteren Hohlräder drehen sich während des Betriebs des Instruments nicht mit. Das Drehmoment lässt sich dadurch sehr präzise einstellen. Auch lässt sich dadurch eine Vielzahl an Übersetzungsverhältnissen einstellen.

Dabei liegen die Module (nach DIN 780) der einzelnen Getriebestufen zwischen 0,1 mm und 0,7 mm und vorzugsweise zwischen 0,15 mm und 0,3 mm und für ein Exzentergetriebe vorzugsweise zwischen 0,2 und 0,5 mm. Es versteht sich, dass die Module der Stufen in den einzelnen Hohlrädern auch unterschiedlich groß sein können.

## Patentansprüche

1. Zahnärztliches Instrument (2) mit einem Getriebe (1, 21, 43, 53; 101) zum Antrieb eines Werkzeugs, wobei das Getriebe (1, 21, 43, 53) in einem Getriebegehäuse (4, 23; 104) angeordnet ist und wobei das Getriebe (1, 21, 43, 53; 101) mindestens eine Getriebestufe (10, 11, 24, 25) aufweist, wobei diese eine Getriebestufe (10, 11, 24, 15) mindestens ein Hohlrad (7, 28) enthält und dass im Inneren des Getriebegehäuses (4) mindestens eine Drehmomentbegrenzungsvorrichtung (17, 17', 31, 31'; 117) angeordnet ist, dass das mindestens eine Hohlrad (7, 28; 107) gegenüber dem Gehäuse in Drehrichtung lose gelagert ist, **dadurch gekennzeichnet, dass** die mindestens eine Drehmomentbegrenzungsvorrichtung (17, 17', 31, 31'; 117) ein unter einer Vorspannung stehendes Federelement (18, 18', 32, 32'; 118) enthält, das zumindest teilweise mit dem Hohlrad (7, 28; 107) in Kontakt ist und dieses an dem Getriebegehäuse (4, 23; 104) mittelbar oder unmittelbar zur Anlage bringt, wobei das Hohlrad (7, 28; 107) zur Drehmomentbegrenzung gegenüber dem Getriebegehäuse (4, 23; 104) gegen die Vorspannung durchrutschend ausgebildet ist.

2. Zahnärztliches Instrument nach Anspruch 1, **dadurch gekennzeichnet, dass** das Getriebe (101) eine einzige Getriebestufe aufweist, wobei das Getriebe (101) ein Exzentergetriebe ist und das Hohlrad (107) Teil des Exzentergetriebes ist.

3. Zahnärztliches Instrument nach Anspruch 1, **dadurch gekennzeichnet, dass** das Getriebe (1, 21, 43, 53) zwei oder mehr Getriebestufen aufweist und ein Planetengetriebe (1, 21, 43, 53) ist, wobei das Planetengetriebe (1, 21, 43, 53) mindestens das eine durchrutschende Hohlrad (7, 28) aufweist, wobei jede der mindestens zwei Getriebestufen (10, 11, 24, 25) mindestens ein Planetenrad (8, 12, 27, 30) enthält, das zwischen einem Sonnenrad (3, 13, 26, 29) und dem Hohlrad (7, 28) angeordnet ist und wobei das Hohlrad (7, 28) mit der mindestens einen Drehmomentbegrenzungsvorrichtung (17, 17', 31, 31') in Kontakt ist.

4. Zahnärztliches Instrument nach einem der Ansprüche 1 bis 3, **dadurch gekennzeichnet, dass** weitere Hohlräder vorgesehen sind, in denen jeweils mindestens eine weitere Getriebestufe vorgesehen ist, wobei diese weiteren Hohlräder entweder drehfest oder lose in dem Getriebegehäuse (4, 23; 104) eingebracht sind.

5. Zahnärztliches Instrument nach einem der Ansprüche 1 bis 4, **dadurch gekennzeichnet, dass** jede Getriebestufe (10, 11, 24, 25) ein Modul aufweist, das zwischen 0,1 mm und 0,7 mm und vorzugsweise zwischen 0,15 mm und 0,3 mm und für ein Exzentergetriebe vorzugsweise zwischen 0,2 und 0,5 mm liegt.

6. Zahnärztliches Instrument nach einem der Ansprüche 1 bis 5, **dadurch gekennzeichnet, dass** eine zweite Drehmomentbegrenzungsvorrichtung (17') vorgesehen ist, die im Inneren des Getriebegehäuses (4) angeordnet ist, wobei das Federelement (18') zumindest teilweise mit einem dem ersten Ende (16) gegenüberliegenden Ende (16') des Hohlrads (7) in Kontakt bringbar ist.

7. Zahnärztliches Instrument nach einem der Ansprüche 1 bis 6, **dadurch gekennzeichnet, dass** ein fest in dem Getriebegehäuse (4) angeordneter Gegenhalter (20; 205) vorgesehen ist und dass das Federelement (18; 118) der Drehmomentbegrenzungsvorrichtung (17; 117) zwischen dem Ende (16) des Hohlrads (7; 107) und dem Gegenhalter (20; 205) angeordnet ist.

8. Zahnärztliches Instrument nach einem der Ansprüche 1 bis 7, **dadurch gekennzeichnet, dass** ein Gegenhalter (57, 64) vorgesehen ist, an dem das Federelement (18) der Drehmomentbegrenzungsvorrichtung (17) derart angebracht ist, dass das Federelement (18) zwischen dem Ende (16) des Hohlrads (7) und dem Gegenhalter (57, 64) angeordnet ist, wobei der Gegenhalter (57, 64) in dem Getriebegehäuse (4) angeordnet ist und Teil eines Verstellglieds (44, 54) ist, mit dem die Vorspannung und damit die Federkraft des Federelements (18) und somit das Drehmoment veränderbar ist.

9. Zahnärztliches Instrument nach Anspruch 8, **dadurch gekennzeichnet, dass** das Verstellglied (44, 54) einen Hebel (45, 55) aufweist, der außerhalb des Getriebegehäuses (4) angeordnet ist und über ein Verbindungsmittel (46, 56) mit dem Gegenhalter (57, 64) verbunden ist.

10. Zahnärztliches Instrument nach Anspruch 9, **dadurch gekennzeichnet, dass** das Getriebegehäuse (4) eine Bohrung (47, 61) aufweist, in der das Verbindungsmittel (46, 56) eingebracht ist.

11. Zahnärztliches Instrument nach einem der Ansprüche 8 bis 10, **dadurch gekennzeichnet, dass** das Verstellglied (44, 54) ein Gewinde (48, 58) aufweist, das mit einem Verstellgewinde (49, 59) in Verbindung steht, wobei das Verstellgewinde (49, 59) in einer in dem Getriebegehäuse (4) angeordneten Nut (49, 60) sitzt.

12. Zahnärztliches Instrument nach einem der Ansprüche 1 bis 11, **dadurch gekennzeichnet, dass** die mindestens eine Drehmomentbegrenzungsvorrichtung (31, 31') über das Federelement (32, 32') mit einem Verstellglied (35, 35') verbunden ist, wobei das Verstellglied (35, 35') zumindest teilweise in einer umlaufenden Nut (41, 41') sitzt, wobei die Nut (41, 41') an einer Außenseite des Getriebegehäuses (23) eingebracht ist.

13. Zahnärztliches Instrument nach Anspruch 12 , **dadurch gekennzeichnet, dass** sich an die Nut (41, 41') eine radial verlaufende Bohrung (66, 66') anschließt, in der das Federelement (32, 32') derart angeordnet ist, dass das Federelement (32, 32') mit einer Außenfläche (34) des Hohlrads (28) in Kontakt ist.

14. Zahnärztliches Instrument nach Anspruch 12, **dadurch gekennzeichnet, dass** das Verstellglied (35, 35') eine Stellschraube ist.

15. Zahnärztliches Instrument nach einem der Ansprüche 1 bis 14, **dadurch gekennzeichnet, dass** an dem Federelement (18, 18', 32, 32'; 118) eine Scheibe (19; 119) angebracht ist, wobei die Scheibe (19; 119) zwischen dem Federelement (18, 18', 32, 32'; 118) und dem Hohlrad (7; 107) angeordnet ist, so dass die Scheibe (19; 119) mit dem Hohlrad (7, 28; 107) in Kontakt ist.

16. Zahnärztliches Instrument nach einem der Ansprüche 1 bis 15, **dadurch gekennzeichnet, dass** mindestens eine Drehmomentbegrenzungsvorrichtung (31, 31') vorgesehen ist, die mit der Außenfläche (34) des Hohlrads (7, 28) in Kontakt ist und mindestens eine weitere Drehmomentbegrenzungsvorrichtung (17, 17') vorgesehen ist, die mit einem Ende (16, 16') des Hohlrads (7, 28) in Kontakt ist.

## Claims

1. Dental instrument (2) having a gear mechanism (1, 21, 43, 53; 101) for driving a tool, wherein the gear mechanism (1, 21, 43, 53) is disposed in a gear housing (4, 23; 104), and wherein the gear mechanism (1, 21, 43, 53; 101) comprises at least one gear stage (10, 11, 24, 25), wherein said one gear stage (10, 11, 24, 15) contains at least one ring gear (7, 28), at least one torque limiting device (17, 17', 31, 31'; 117) is disposed in the interior of the gear housing (4), and the at least one ring gear (7, 28; 107) is mounted loosely relative to the housing in the direction of rotation, **characterized in that** the at least one torque limiting device (17, 17', 31, 31'; 117) contains a preloaded spring element (18, 18', 32, 32'; 118), which is at least partially in contact with the ring gear (7, 28; 107) and brings said ring gear directly or indirectly into contact with the gear housing (4, 23; 104), wherein the ring gear (7, 28; 107) is designed to slip relative to the gear housing (4, 23; 104) against the preloading in order to limit the torque.

2. Dental instrument according to Claim 1, **characterized in that** the gear mechanism (101) comprises a single gear stage, wherein the gear mechanism (101) is an eccentric gearing and the ring gear (107) is part of the eccentric gearing.

3. Dental instrument according to Claim 1, **characterized in that** the gear mechanism (1, 21, 43, 53) comprises two or more gear stages and is a planetary gearing (1, 21, 43, 53), wherein the planetary gearing (1, 21, 43, 53) at least comprises the one slipping ring gear (7, 28), wherein each of the at least two gear stages (10, 11, 24, 25) contains at least one planet wheel (8, 12, 27, 30) which is arranged between a sun gear (3, 13, 26, 29) and the ring gear (7, 28), and wherein the ring gear (7, 28) is in contact with the at least one torque limiting device (17, 17', 31, 31').

4. Dental instrument according to any one of Claims 1 to 3, **characterized in that** further ring gears are provided, in each of which at least one further gear stage is provided, wherein said further ring gears are either rotationally fixedly or loosely incorporated in the gear housing (4, 23; 104).

5. Dental instrument according to any one of Claims 1 to 4, **characterized in that** each gear stage (10, 11, 24, 25) has a module that is between 0.1 mm and 0.7 mm, preferably between 0.15 mm and 0.3 mm, and for an eccentric gearing is preferably between 0.2 and 0.5 mm.

6. Dental instrument according to any one of Claims 1 to 5, **characterized in that** a second torque limiting device (17') is provided, which is disposed in the interior of the gear housing (4), wherein the spring element (18') can be brought at least partially into contact with an end (16') of the ring gear (7) opposite to the first end (16).

7. Dental instrument according to any one of Claims 1 to 6, **characterized in that** a counter support (20; 205) is provided, which is fixedly disposed in the gear housing (4), and that the spring element (18; 118) of the torque limiting device (17; 117) is disposed between the end (16) of the ring gear (7; 107) and the counter support (20; 205).

8. Dental instrument according to any one of Claims 1 to 7, **characterized in that** a counter support (57, 64) is provided, on which the spring element (18) of the torque limiting device (17) is mounted in such a way that the spring element (18) is disposed between the end (16) of the ring gear (7) and the counter support (57, 64), wherein the counter support (57, 64) is disposed in the gear housing (4) and is part of an adjusting element (44, 54), by means of which the preloading, and thus the spring force, of the spring element (18), and consequently the torque, can be modified.

9. Dental instrument according to Claim 8, **characterized in that** the adjusting element (44, 54) comprises a lever (45, 55), which is disposed outside the gear housing (4) and is connected to the counter support (57, 64) via a connecting means (46, 56).

10. Dental instrument according to Claim 9, **characterized in that** the gear housing (4) comprises a bore (47, 61), in which the connecting means (46, 56) is inserted.

11. Dental instrument according to any one of Claims 8 to 10, **characterized in that** the adjusting element (44, 54) comprises a thread (48, 58) which is connected to an adjustment thread (49, 59), wherein the adjustment thread (49, 59) is seated in a groove (49, 60) disposed in the gear housing (4).

12. Dental instrument according to any one of Claims 1 to 11, **characterized in that** the at least one torque limiting device (31, 31') is connected to an adjusting element (35, 35') via the spring element (32, 32'), wherein the adjusting element (35, 35') is at least partially seated in a peripheral groove (41, 41'), wherein the groove (41, 41') is incorporated on an outer side of the gear housing (23).

13. Dental instrument according to Claim 12, **characterized in that** a radially extending bore (66, 66'), in which the spring element (32, 32') is disposed in such a way that the spring element (32, 32') is in contact with an outer surface (34) of the ring gear (28), adjoins the groove (41, 41').

14. Dental instrument according to Claim 12, **characterized in that** the adjusting element (35, 35') is an adjusting screw.

15. Dental instrument according to any one of Claims 1 to 14, **characterized in that** a disc (19; 119) is attached to the spring element (18, 18', 32, 32'; 118), wherein the disc (19; 119) is disposed between the spring element (18, 18', 32, 32'; 118) and the ring gear (7; 107), so that the disc (19; 119) is in contact with the ring gear (7, 28; 107).

16. Dental instrument according to any one of Claims 1 to 15, **characterized in that** at least one torque limiting device (31, 31') is provided, which is in contact with the outer surface (34) of the ring gear (7, 28), and at least one further torque limiting device (17, 17') is provided, which is in contact with an end (16, 16') of the ring gear (7, 28).

## Revendications

1. Instrument de médecine dentaire (2) doté d'un engrenage (1, 21, 43, 53 ; 101) pour l'entraînement d'un outil, l'engrenage (1, 21, 43, 53) étant disposé dans un boîtier d'engrenage (4, 23 ; 104) et
l'engrenage (1, 21, 43, 53 ; 101) présentant au moins un étage d'engrenage (10, 11, 24, 25), ledit un étage d'engrenage (10, 11, 24, 15) contenant au moins une couronne dentée (7, 28), et au moins un dispositif de limitation de couple (17, 17', 31, 31' ; 117) étant disposé à l'intérieur du boîtier d'engrenage (4), l'au moins une couronne dentée (7, 28 ; 107) étant placée lâche dans le sens de rotation par rapport au boîtier, **caractérisé en ce que** l'au moins un dispositif de limitation de couple (17, 17', 31, 31' ; 117) contient un élément de ressort (18, 18', 32, 32' ; 118) sous précontrainte, au moins partiellement en contact avec la couronne dentée (7, 28 ; 107) et qui amène celle-ci en butée, directement ou indirectement, sur le boîtier d'engrenage (4, 23 ; 104), la couronne dentée (7, 28 ; 107) étant formée de manière à pouvoir patiner contre la précontrainte, permettant de limiter le couple par rapport au boîtier d'engrenage (4, 23 ; 104).

2. Instrument de médecine dentaire selon la revendication 1, **caractérisé en ce que**
l'engrenage (101) présente un étage d'engrenage unique, l'engrenage (101) étant un engrenage excentrique et la couronne dentée (107) faisant partie de l'engrenage excentrique.

3. Instrument de médecine dentaire selon la revendication 1, **caractérisé en ce que** l'engrenage (1, 21, 43, 53) présente deux étages d'engrenage ou plus et consiste en un engrenage planétaire (1, 21, 43, 53), ledit engrenage planétaire (1, 21, 43, 53) présentant au moins ladite une couronne dentée (7, 28) pouvant patiner, chacun des au moins deux étages d'engrenage (10, 11, 24, 25) contenant au moins un planétaire (8, 12, 27, 30) qui est disposé entre une roue solaire (3, 13, 26, 29) et la couronne dentée (7, 28), ladite couronne dentée (7, 28) étant en contact avec l'au moins un dispositif de limitation de couple (17, 17', 31, 31').

4. Instrument de médecine dentaire selon une des revendications 1 à 3, **caractérisé en ce qu'**il est prévu d'autres couronnes dentées dans lesquelles il est prévu respectivement au moins un autre étage d'engrenage, ces autres couronnes dentées étant disposées solidaires en rotation ou lâches dans le boîtier d'engrenage (4, 23 ; 104) .

5. Instrument de médecine dentaire selon une des revendications 1 à 4, **caractérisé en ce que** chaque étage d'engrenage (10, 11, 24, 25) présente un module qui se situe entre 0,1 mm et 0,7 mm et de préférence entre 0,15 mm et 0,3 mm, et pour un engrenage excentrique de préférence entre 0,2 et 0,5 mm.

6. Instrument de médecine dentaire selon une des revendications 1 à 5, **caractérisé en ce qu'**il est prévu un deuxième dispositif de limitation de couple (17') disposé à l'intérieur du boîtier d'engrenage (4), l'élément de ressort (18') pouvant être amené au moins partiellement en contact avec une extrémité (16') de la couronne dentée (7) qui est opposée à sa première extrémité (16).

7. Instrument de médecine dentaire selon une des revendications 1 à 6, **caractérisé en ce qu'**il est prévu un contre-support (20 ; 205) disposé fixe dans le boîtier d'engrenage (4) et **en ce que** l'élément de ressort (18 ; 118) du dispositif de limitation de couple (17 ; 117) est disposé entre l'extrémité (16) de la couronne dentée (7 ; 107) et le contre-support (20 ; 205) .

8. Instrument de médecine dentaire selon une des revendications 1 à 7, **caractérisé en ce qu'**il est prévu un contre-support (57, 64) sur lequel l'élément de ressort (18) du dispositif de limitation de couple (17) est appliqué de manière que l'élément de ressort (18) est disposé entre l'extrémité (16) de la couronne dentée (7) et le contre-support (57, 64), ledit contre-support (57, 64) étant disposé dans le boîtier d'engrenage (4) et faisant partie d'un organe de réglage (44, 54) avec lequel la précontrainte et ainsi la force de rappel de l'élément de ressort (18), et donc le couple, peuvent être modifiés.

9. Instrument de médecine dentaire selon la revendication 8, **caractérisé en ce que** l'organe de réglage (44, 54) présente un levier (45, 55) qui est disposé en dehors du boîtier d'engrenage (4) et est relié au contre-support (57, 64) par le biais d'un moyen de liaison (46, 56).

10. Instrument de médecine dentaire selon la revendication 9, **caractérisé en ce que** le boîtier d'engrenage (4) présente un alésage (47, 61) dans lequel le moyen de liaison (46, 56) est inséré.

11. Instrument de médecine dentaire selon une des revendications 8 à 10, **caractérisé en ce que** l'organe de réglage (44, 54) présente un filetage (48, 58) qui est relié à un filetage de réglage (49, 59), ledit filetage de réglage (49, 59) est situé dans une rainure (49, 60) disposée dans le boîtier d'engrenage (4).

12. Instrument de médecine dentaire selon une des revendications 1 à 11, **caractérisé en ce que** l'au moins un dispositif de limitation de couple (31, 31') est relié à un organe de réglage (35, 35') par le biais de l'élément de ressort (32, 32'), l'organe de réglage (35, 35') logeant au moins partiellement dans une rainure circonférentielle (41, 41'), laquelle rainure (41, 41') est pratiquée sur un côté externe du boîtier d'engrenage (23).

13. Instrument de médecine dentaire selon la revendication 12, **caractérisé en ce qu'**un alésage (66, 66') à étendue radiale fait suite à l'encoche (41, 41') et reçoit l'élément de ressort (32, 32') de manière que l'élément de ressort (32, 32') est en contact avec une surface externe (34) de la couronne dentée (28).

14. Instrument de médecine dentaire selon la revendication 12, **caractérisé en ce que** l'organe de réglage (35, 35') est une vis de réglage.

15. Instrument de médecine dentaire selon une des revendications 1 à 14, **caractérisé en ce qu'**un disque (19 ; 119) est appliqué sur l'élément de ressort (18, 18', 32, 32' ; 118), ledit disque (19 ; 119) étant disposé entre l'élément de ressort (18, 18', 32, 32' ; 118) et la couronne dentée (7 ; 107) de manière que le disque (19 ; 119) est en contact avec la couronne dentée (7, 28 ; 107).

16. Instrument de médecine dentaire selon une des revendications 1 à 15, **caractérisé en ce qu'**il est prévu au moins un dispositif de limitation de couple (31, 31') en contact avec la surface externe (34) de la couronne dentée (7, 28), ainsi qu'au moins un autre dispositif de limitation de couple (17, 17') en contact avec une extrémité (16, 16') de la couronne dentée (7, 28).
